# EUROPÄISCHE PATENTSCHRIFT

(11) **EP 3 539 176 B1**
(45) Veröffentlichungstag und Bekanntmachung des Hinweises auf die Patenterteilung: **16.09.2020**
(21) Anmeldenummer: 17804105.9
(22) Anmeldetag: 09.11.2017
(51) Int. Cl.: H01M 8/18, H01M 8/0206, H01M 8/0228

(54) **ABSCHLUSSANORDNUNG EINES ZELLSTACKS EINER REDOX-DURCHFLUSSBATTERIE**
TERMINATION ASSEMBLY OF A CELL STACK OF A REDOX FLOW BATTERY
DISPOSITIF DE FERMETURE D'UN EMPILEMENT DE CELLULES D'UNE BATTERIE À FLUX REDOX

(30) Priorität: 11.11.2016 AT 510262016
(43) Veröffentlichungstag der Anmeldung: 18.09.2019
(73) Patentinhaber: Enerox GmbH, 2355 Wiener Neudorf (AT)
(72) Erfinder: WHITEHEAD, Adam Harding, 7000 Eisenstadt (AT); HARRER, Martin, 1040 Wien (AT); POKORNY, Peter, 3001 Mauerbach (AT); TRAMPERT, Markus, 1170 Wien (AT)
(74) Vertreter: Patentanwälte Pinter & Weiss OG
(86) Internationale Anmeldenummer: PCT/EP2017/078743
(87) Internationale Veröffentlichungsnummer: WO 2018/087220

(56) Entgegenhaltungen:
- US-A1- 2012 164 499
- US-A1- 2014 159 668
- US-A1- 2015 372 350

## Beschreibung

Die gegenständliche Erfindung betrifft eine Abschlussanordnung eines Zellstacks einer Redox-Durchflussbatterie mit einem Stromabnehmer und einer Elektrodenendplatte, wobei die Elektrodenendplatte und der Stromabnehmer in einem Kontaktbereich aneinander anliegend angeordnet sind und in elektrischem Kontakt stehen, wobei in zumindest 20% des Kontaktbereichs der Stromabnehmer mit einer elektrisch leitfähigen Stromabnehmerbeschichtung beschichtet ist. Zudem betrifft die gegenständliche Erfindung einen Zellstack einer Redox-Durchflussbatterie bestehend aus einer Mehrzahl zwischen zwei Endzellen angeordneten aneinanderliegenden Zellen, wobei die Zellen und Endzellen jeweils aus zwei mittels einer semipermeablen Membran getrennten Halbzellen bestehen, sich zwischen den Zellen Elektroden befinden und sich an einer hinsichtlich des Zellstacks axial außen liegenden Seite zumindest einer Endzelle eine erfindungsgemäße Abschlussanordnung befindet, sowie und eine Redox-Durchflussbatterie umfassend zumindest einem derartigen Zellstack.

Eine Redox-Durchflussbatterie ist ein System zur Energieerzeugung bzw. -speicherung auf elektrochemischer Basis und besteht üblicherweise aus Tanks zur Speicherung positiver und negativer Elektrolytflüssigkeiten, sowie Pumpen und Leitungen zur Umwälzung der Elektrolytflüssigkeiten durch einen oder mehrere Zellstacks, welche wiederum jeweils aus einer Anzahl Zellen bestehen. Die Zellen des Zellstacks werden jeweils durch eine positive Halbzelle und eine negative Halbzelle gebildet, wobei die positive und negative Halbzelle einer Zelle durch eine semipermeable Membran, typischerweise eine Ion-Austauschmembran, voneinander getrennt sind. Die positive Halbzelle enthält eine in einem Rahmen befindliche positive Elektrode, die von der positiven Elektrolytflüssigkeit durchströmt wird. Die negative Halbzelle enthält eine in einem Rahmen befindliche negative Elektrode, die von der negativen Elektrolytflüssigkeit durchströmt wird. Für den Fall einer Vanadium-Redox-Durchflussbatterie kann die positive Elektrolytflüssigkeit beispielsweise im geladenen Zustand vier- und fünfwertiges Vanadium, Schwefelsäure und gegebenenfalls weitere Additive enthalten. Die negative Elektrolytflüssigkeit kann beispielsweise im geladenen Zustand zwei- und dreiwertiges Vanadium, Schwefelsäure und gegebenenfalls weitere Additive enthalten (und ist damit "negativer" als die positive Elektrolytflüssigkeit). Die positiven und negativen Elektroden sind meist als poröse Matten aus Graphit gefertigt, die von der Elektrolytflüssigkeit durchströmt werden können.

In Redox-Durchflussbatterien kommen zwei Typen von Rahmen zum Einsatz, nämlich Rahmen aus elastischen Kunststoffen (Elastomere) und nicht elastischen Kunststoffen, wie z.B. PVC, PP, PE, PTFE, Epoxidharz, etc. Nicht elastische Kunststoffe, typischerweise thermoplastische Kunststoffe, sind steif und nur innerhalb eines gewissen Temperaturbereichs formbar. Elastomere sind formfeste, aber elastisch verformbare Kunststoffe, d.h., dass ein Elastomer nach Deformation wieder in seine ursprüngliche Ausgangsform zurückkehrt.

Zwischen einzelnen benachbarten Zellen des Zellstacks sind bipolare Elektrodenplatten angeordnet, welche meist aus einem Verbundmaterial aus Kohlenstoff und Kunststoff gefertigt wird, da die Elektrodenplatten - wie auch die Rahmen und die Elektroden - resistent gegenüber der Elektrolytflüssigkeit sein müssen. Je höher der Kohlenstoffanteil in der Elektrodenplatte ist, desto höher ist die elektrische Leitfähigkeit der Elektrodenplatte, weswegen Elektrodenplatten üblicherweise zu mindestens 50 Gewichtsprozent, meist jedoch zu über 80 Gewichtsprozent aus Kohlenstoff bestehen. Es ist bekannt, dass Kohlenstoff weitaus schlechter elektrisch leitfähig ist, als Metalle wie Kupfer oder Aluminium. Metalle würden sich damit als Material für die Elektrodenplatte aufdrängen, jedoch kommen metallische Elektrodenplatten nicht in Frage, da diese Materialien bekanntermaßen nicht resistent gegenüber der Elektrolytflüssigkeit sind. Metallische Elektrodenplatten würden sich in Kontakt mit der Elektrolytflüssigkeit schon nach kurzer Zeit auflösen.

An den axialen Enden der aneinandergereihten Zellen des Zellstacks sind jeweils Endzellen angeordnet, die strukturell mit den dazwischen befindlichen Zellen identisch sind. Auf den axialen Außenseiten der Endzellen befinden sich zum beidseitigen Abschluss des Zellstacks jedoch anstelle von Elektrodenplatten jeweils Elektrodenendplatten, die prinzipiell baugleich mit den Elektrodenplatten, sein können. Die Elektrodenendplatten können allerdings auch aus einem anderen Material beschaffen sein oder eine andere Dicke als eine Elektrodenplatte aufweisen. Der wesentliche Unterschied von Elektrodenendplatten zu Elektrodenplatten ist jedoch dadurch gegeben, dass an den Flächen der Elektrodenendplatten, die der benachbarten letzten Zelle des Zellstacks, auch Endzelle genannt, abgewandt sind, Stromabnehmer anliegen. In Gegensatz dazu liegen - wie erwähnt - bei Elektrodenplatten an beiden Flächen Elektroden an. Über die Stromabnehmer kann ein elektrischer Kontakt nach außen geführt werden, um elektrische Spannung abgreifen zu können (Entladen der Redox-Durchfluss-batterie) oder um eine elektrische Spannung anlegen zu können (Laden der Redox-Durchflussbatterie).

Der Zellstack wird auf der axialen Außenseite nach den Endrahmen jeweils von einer Endplatte abgeschlossen. Somit befinden sich an den axialen Enden des Zellstacks jeweils von innen nach außen aufgezählt jeweils: Endzellen, Endelektroden, Endrahmen mit Stromabnehmern und Endplatten. Der Zellstack wird durch die beidseitig angeordneten Endplatten zusammengehalten.

Die Stromabnehmer sind mit einem nach außen geführten elektrischen Anschluss der Redox-Durchflussbatterie verbunden und werden oftmals aus Kupfer gefertigt, da Kupfer eine hohe elektrische Leitfähigkeit aufweist und zudem kostengünstig ist. Zusätzlich wird ein aus Kupfer gefertigter Stromabnehmer oftmals mit Silber beschichtet, um einen noch besseren Kontakt zur Elektrodenendplatte zu erzeugen. Eine Fertigung der Stromabnehmer aus Kohlenstoff, bzw. Graphit wäre nicht zielführend, da die Stromabnehmer eine sehr hohe elektrische Leitfähigkeit aufweisen müssen, um den Wirkungsgrad der Redox-Durchflussbatterie nicht negativ zu beeinflussen.

Ein Kontakt zwischen der Elektrolytflüssigkeit einer Redox-Durchflussbatterie und einem vorhandenen Stromabnehmer, ist dabei grundlegend (insbesondere konstruktiv) zu unterbinden, da die saure (z.B. im Falle einer Vanadium-Redox-Batterie) oder auch basische Elektrolytflüssigkeit unweigerlich eine Korrosion des in der Regel metallischen Stromabnehmers bewirkt. Es könnte allerdings zu einem derartigen Kontakt zwischen Elektrolytflüssigkeit und Stromabnehmer kommen, wenn ein Leck im Bereich des Stromabnehmers, z.B. durch eine defekte Elektrodenendplatte oder durch eine fehlerhafte Dichtung zwischen Endzelle und Stromabnehmer, auftritt. Bleibt das Leck unbemerkt, so wird der Stromabnehmer durch die Elektrolytflüssigkeit, üblicherweise innerhalb von 10-20 Stunden, vollständig aufgelöst. Dieser Effekt ist insbesondere im Leerlauf der Redox-Durchflussbatterie nicht zu bemerken, doch auch im Normalbetrieb wird das Auflösen eines Stromabnehmers oftmals erst bemerkt, wenn dieser sich bereits vollständig in Lösung in der Elektrolytflüssigkeit befindet, da der Wirkungsgrad der Redox-Durchflussbatterie bei Auflösung des Stromabnehmers nicht sprungartig, sondern langsam absinkt. Gerade bei Verwendung mehrerer Zellstacks und damit mehrerer Stromabnehmer in einer Redox-Durchflussbatterie ist die Abnahme des Wirkungsgrads nicht gravierend genug, um schnell auf ein Auflösen eines Stromabnehmers zu schließen. Doch selbst wenn das Auflösen eines Stromabnehmers bemerkt wird, so müsste das Leck erst lokalisiert werden, was wiederum Zeit benötigt.

Somit gelangt bei Kontakt mit der Elektrolytflüssigkeit das Material des Stromabnehmers, z.B. Kupfer in Form von Cu²⁺-Ionen und Silber in Form von Ag⁺-Ionen, in die Elektrolytflüssigkeit, welche weiterhin durch die Zellen vorhandener, oftmals auch mehrerer, Zellstacks fließt. Durch die Ion-Austauschmembran kann das gelöste Material des Stromabnehmers auch von der negativen in die positive Elektrolytflüssigkeit und umgekehrt gelangen. Das in der Elektrolytflüssigkeit gelöste Kupfer, und gegebenenfalls auch andere Materialien wie Silber, würden sich aufgrund von elektrochemischen Vorgängen an den negativen Elektroden der vorhandenen Zellen aller verbundenen Zellstacks ablagern. Dies führt zu einer Beeinträchtigung des Flussverhaltens der Elektrolyflüssigkeit durch die negativen Elektroden, da die Poren der negativen Elektroden mit Kupferpartikeln, und gegebenenfalls anderen Materialien, verstopft werden.

Zusätzlich führen die Kupferpartikel, und gegebenenfalls weitere Partikel, aufgrund ihrer Eigenschaft als Wasserstoff-Katalysatoren auf den negativen Elektroden zu einer erhöhten Wasserstoffentwicklung in der Redox-Durchflussbatterie.

Sowohl die Beschichtung bzw. Verstopfung der Elektroden mit Kupfer bzw. anderen Materialien, als auch die daraus resultierende Wasserstoffbildung sind außerordentlich schädlich für die Redox-Durchflussbatterie und daher zu vermeiden. Die schädliche Wirkung von Wasserstoff in Redox-Durchflussbatterien ist hinlänglich bekannt, weswegen an dieser Stelle nicht weiter darauf eingegangen wird. Selbst wenn das Auflösen des Stromabnehmers bemerkt wird, ist die Redox-Durchflussbatterie zu diesem Zeitpunkt bereits so geschädigt, dass zumindest eine aufwendige Wartung notwendig wird.

Ein Leck im Bereich der Stromabnehmer kann also nach einer gewissen Zeit eine Kontamination der gesamten Elektrolytflüssigkeit und in weiterer Folge auch einen Totalausfall aller Zellstacks und damit einen Totalausfall der gesamten Redox-Durchflussbatterie verursachen. Schlimmstenfalls muss bei Kontakt der Elektrolytflüssigkeit mit dem Stromabnehmer also nicht nur die Elektrolytflüssigkeit ausgetauscht oder gereinigt und der Stromabnehmer ersetzt werden, sondern jeder in der Redox-Durchflussbatterie vorhandene Zellstack ausgetauscht oder zumindest die darin befindlichen Elektroden von den Kupferablagerungen, bzw. Ablagerungen anderer Materialien, befreit werden.

Es ist bekannt, dass auch Aluminium bei Kontakt mit der Elektrolytflüssigkeit einer Redox-Durchflussbatterie in dieser gelöst wird, im Gegensatz zu Kupfer in weiterer Folge jedoch keine oben beschriebenen negativen Effekte (wie z.B. eine Wasserstoffbildung) verursacht. Die Patentschrift AT 513 834 B2 offenbart beispielsweise einen Stromabnehmer, der aus Aluminium gefertigt ist. Zudem ist der Stromabnehmer mit einem elektrisch leitfähigen Material wie Zn, Sn, Ni, Pb, Sb, Cd, Cr, C, In, Al, V, Fe, bzw. Legierungen daraus beschichtet. Auch werden anorganische Verbindungen, wie Oxide, Hydroxide, Carbide, Phosphide, Sulphide, Boride, etc., oder elektrisch leitende Polymere als Materialien für Stromabnehmerbeschichtungen erwähnt. Gleichfalls sind auch Zwischenschichten, z.B. aus Ni, zwischen der Beschichtung und dem Grundmaterial des Stromabnehmers offenbart. Konkret ist als Beispiel für einen Stromabnehmer 200 µm Aluminium mit einer Zwischenschicht aus 5 µm Ni und einer äußeren Beschichtung aus 10-100 µm Sn genannt. Eine Begründung für diese Ausgestaltung der Stromabnehmer wird in der Patentschrift jedoch nicht genannt.

Die JP 11329474 A2 schlägt die Fertigung von Stromabnehmern aus Aluminium vor, allerdings um gegenüber einer Fertigung aus Kupfer ein geringeres Gesamtgewicht der Redox-Durchflussbatterie zu erreichen.

Es ist Aufgabe der gegenständlichen Erfindung, eine Abschlussanordnung mit einem Stromabnehmer einer Redox-Durchflussbatterie anzugeben, der einen ausreichend hohen Wirkungsgrad der Redox-Durchflussbatterie ermöglicht und bei Kontakt mit einer Elektrolytflüssigkeit die Elektrolytflüssigkeit nicht kontaminiert.

Diese Aufgabe wird erfindungsgemäß gelöst, indem die Elektrodenendplatte in zumindest 20% des Kontaktbereichs mit einer elektrisch leitfähigen Elektrodenbeschichtung beschichtet ist, die Kombination des Stromabnehmers, der Stromabnehmerbeschichtung und der Elektrodenbeschichtung zu insgesamt maximal 5 Gewichtsprozent aus Cu und Ag und zu insgesamt maximal 0,05 Gewichtsprozent aus Elementen der Platingruppe besteht und dass der elektrische Widerstand der Kombination des Stromabnehmers, der Stromabnehmerbeschichtung und der Elektrodenbeschichtung über einen Zeitraum von mindestens 2000 Stunden 1 Ohm.cm² nicht überschreitet. Es sei zu beachten, dass die erwähnte Kombination die Elektrodenendplatte, die ja bekanntermaßen üblicherweise ohnehin nichtmetallisch ist, nicht einschließt. Die Bestimmung des zeitlichen Verlaufs dieses Widerstands kann an einer in einem zusammengebauten Zellstack (der in Betrieb oder auch außer Betreib sein kann) befindlichen Abschlussanordnung erfolgen. Alternativ kann der Widerstandsverlauf auch in einer einzelnen, noch nicht in einem Zellstack verbauten, Abschlussanordnung gemessen werden. Die 2000 Stunden können somit Betriebsstunden sein, müssen aber nicht unbedingt Betriebsstunden sein, wobei eine Mischung aus Betriebsstunden und nicht Betriebsstunden ebenso denkbar ist. Der Widerstand verschlechtert sich in erster Linie aufgrund von Korrosionseffekten, wie weiter unten beschreiben wird.

Um einen noch besseren elektrischen Kontakt zwischen dem Stromabnehmer und der Elektrodenendplatte zu erreichen, kann der Stromabnehmer in zumindest 50%, vorzugsweise zumindest 90% des Kontaktbereichs mit einer elektrisch leitfähigen Stromabnehmerbeschichtung beschichtet sein, sowie die Elektrodenendplatte in diesen zumindest 50%, vorzugsweise zumindest 90%, des Kontaktbereichs mit einer elektrisch leitfähigen Elektrodenbeschichtung beschichtet sein. Der beste elektrische Kontakt wird natürlich erzeugt, wenn der Stromabnehmer in 100% des Kontaktbereichs mit einer elektrisch leitfähigen Stromabnehmerbeschichtung beschichtet ist, und die Elektrodenendplatte in 100% des Kontaktbereichs mit einer elektrisch leitfähigen Elektrodenbeschichtung beschichtet ist. Prozessbedingt können die Stromabnehmerbeschichtung und/oder die Elektrodenbeschichtung Pinholes (also kleine Defekte in der Beschichtung) aufweisen, die für die Definition der prozentualen Abdeckung des Kontaktbereichs nicht herangezogen werden. Das heißt dass eine Stromabnehmerbeschichtung bzw. Elektrodenbeschichtung trotz Pinholes z.B. 100% des Kontaktbereichs beschichten kann.

Um eine Wasserstoffentwicklung im Falle des Auflösens des Materials des Stromabnehmers in der Elektrolytflüssigkeit zu verhindern, wäre theoretisch die Fertigung des Stromabnehmers aus purem Aluminium möglich. In der Elektrolytflüssigkeit gelöstes Aluminium würde sich nicht auf den negativen Elektroden ablagern und damit auch keinen Wasserstoff erzeugen. Zudem weist Aluminium eine geringere Dichte als Kupfer auf, womit die Verwendung von Aluminium-Stromabnehmern eine Gewichtsersparnis bewirkt, wie aus dem Stand der Technik bekannt ist. Es hat sich jedoch gezeigt, dass Stromabnehmer aus reinem Aluminium aufgrund der Bildung eines hochohmigen Oxidfilms auf der Oberfläche einen zu hohen Oberflächenwiderstand aufweisen und somit aufgrund der geringen elektrischen Leitfähigkeit zwischen Elektrodenendplatte und Stromabnehmer sofort unbrauchbar sind oder im Laufe der Zeit (nach spätestens einer Woche) unbrauchbar werden, da der Wirkungsgrad der Redox-Durchflussbatterie rapide sinkt. Eine (weitere) Oxidation des Aluminium-Stromabnehmers erfolgt selbst bei einem üblichen Anpressdruck von 10 kPa zwischen Stromabnehmer und Elektrodenendplatte.

Eine Beschichtung des beispielsweise aus Aluminium gefertigten Stromabnehmers, in zumindest 20% des Kontaktbereichs, d.h. auf der der Elektrodenendplatte zugewandten Seite, mit einer dünnen Stromabnehmerbeschichtung aus leitfähigem Material würde der Bildung dieser Oxidschicht zumindest teilweise vorbeugen. Das Material der Stromabnehmerbeschichtung würde sich bei Kontakt mit der Elektrolytflüssigkeit ebenso wie das Grundmaterial des Stromabnehmers auflösen, weswegen auch die Wahl des Materials der Stromabnehmerbeschichtung kritisch ist. Selbstverständlich sollten auch durch in der Elektrolytflüssigkeit gelöste Stromabnehmerbeschichtungen in der Redox-Durchfluss-Batterie möglichst wenig negative Effekte, wie sie beispielsweise bei Kupfer, Silber oder bei Elementen der Platin-Gruppe auftreten, verursachen.

Eine Beschichtung der Stromabnehmer mit einer Stromabnehmerbeschichtung führt jedoch insbesondere bei der üblichen Verwendung von Elektrodenendplatten mit einem hohen Kohlenstoffanteil (üblicherweise >80 Gewichtsprozent) zu einer Kontaktkorrosion. Diese Kontaktkorrosion führt wiederum zu einem unerwünschten erhöhten elektrischen Kontaktwiderstand und damit abermals zu einem schlechten elektrischen Kontakt zwischen Elektrodenendplatte und Stromabnehmer, wobei sich dieser Effekt mit der Zeit verstärkt.

Es hat sich jedoch gezeigt, dass es zu einem geringen Kontaktwiderstand zwischen Elektrodenendplatte und Stromabnehmer kommt, wenn in den zumindest 20% des Kontaktbereichs, in welchen bereits der Stromabnehmer mit einer Stromabnehmerbeschichtung versehen ist, eine zusätzliche Elektrodenbeschichtung der Elektrodenendplatten vorgesehen ist. Damit ist weiters auch keine signifikante Kontaktkorrosion feststellbar. Auch für die Wahl des Materials der Elektrodenbeschichtung gilt, dass diese bei Auflösen in Elektrolytflüssigkeit ebendiese nicht kontaminiert werden darf.

In einer Redox-Durchflussbatterie mit einer typischen Stromdichte von 100 mA/cm² würde ein elektrischer Widerstand der Kombination aus Stromabnehmer, Stromabnehmerbeschichtung und Elektrodenbeschichtung von 1 Ohm.cm² 100mV Spannungsverluste verursachen. Ein Zellstack einer Redox-Durchflussbatterie weist eine Leerlaufspannung von etwa 25-40 V auf, je nachdem wie viele Zellen der Zellstack beinhaltet. Bei Vorhandensein zweier Abschlussanordnungen, würde der gesamte durch die jeweiligen Stromabnehmer, Stromabnehmerbeschichtungen und Elektrodenbeschichtungen auftretende Spannungsverlust maximal 200 mV ausmachen. Dies entspricht somit 0,5-0,8% der Leerlaufspannung (je nach Höhe der Leerlaufspannung) in jeweils einer negativen und einer positiven Elektrode, womit sich insgesamt Round-Trip Spannungsverluste von 1-1,4% der Leerlaufspannung ergeben. Dies stellt einen Grenzwert dar, der gerade noch tolerierbar ist. Ein Round-Trip-Spannungsverlust beschreibt bekanntermaßen den doppelten Spannungsverlust, da dieser einmal für einen Ladevorgang, einmal für einen Entladevorgang einer Batterie angenommen wird. Prinzipiell ist der elektrische Widerstand des Stromabnehmers samt Stromabnehmerbeschichtung und der Elektrodenbeschichtung natürlich so gering wie möglich zu halten um wiederum die Spannungsverluste gering zu halten.

Es ist zu beachten, dass sich der Widerstand dieser Kombination aus der Materialien des Stromabnehmers, der Stromabnehmerbeschichtung und der Elektrodenbeschichtung nicht nur durch die elektrischen Widerstände der einzelnen Materialien, sondern durch Kontaktwiderstände, Korrosionswiderstände, usw. der Kombination der Materialien ergibt. Bekanntermaßen weisen elektrisch leitfähige Metalle einen sehr geringen elektrischen Widerstand auf, eine Kombination aus Schichten elektrisch leitfähiger Metalle kann jedoch aufgrund von Kontaktwiderständen, Korrosionswiderständen usw. weitaus höher sein, als die Summe der elektrischen Widerstände der einzelnen Materialien. Experimente haben ergeben, dass sich der elektrische Widerstand der Kombination des Stromabnehmers, der Stromabnehmerbeschichtung und der Elektrodenbeschichtung aufgrund von Kontaktkorrosion nach 2000 Stunden nicht mehr signifikant ändert.

Üblicherweise sind Stromabnehmer und Endelektrodenplatte als separate Bauteile gefertigt, werden hier jedoch gesamtheitlich (mitsamt Stromabnehmerbeschichtung und Elektrodenendplattenbeschichtung) als Abschlussanordnung betrachtet.

Natürlich könnten Elektrodenendplatte und Stromabnehmer auch außerhalb des Kontaktbereichs mit einer Elektrodenbeschichtung, bzw. Stromabnehmerbeschichtung versehen sein, z.B. also auch komplett oberflächenbeschichtet sein. Die Elektrodenbeschichtung, wie auch Stromabnehmerbeschichtung können durch beliebige bekannte Verfahren auf die Elektrodenendplatten, bzw. Stromabnehmer aufgetragen werden, z.B. chemische Abscheidung, (Plasma unterstützte) chemische Gasphasen-Abscheidung, elektrochemische Beschichtung, Sputtern, Kalendierung, usw., wobei eine vollständige und lückenlose Beschichtung der Elektodenendplatte durch die Elektrodenendplattenbeschichtung und des Stromabnehmers durch die Stromabnehmerbeschichtung im Kontaktbereich nicht zwingend notwendig, jedoch bevorzugt, ist.

Liegen die Stromabnehmerbeschichtung und die Elektrodenendplattenbeschichtung nicht im ganzen Kontaktbereich (sondern z.B. nur in 20% des Kontaktbereichs) vor, dann würde dies natürlich bedeuten, dass es im restlichen Kontaktbereich zu Kontaktkorrosion und erhöhten Kontaktwiderständen kommen kann, womit ein erhöhter elektrischer Widerstand auftritt. Der gesamte elektrische Widerstand der Kombination aus Stromabnehmer, Stromabnehmerbeschichtung und Elektrodenendplattenbeschichtung darf also 1 Ohm.cm² nicht überschreiten. Experimente haben ergeben, dass dieser Wert auftritt, wenn die Stromabnehmerbeschichtung und die Elektrodenendplattenbeschichtung in 20% des Kontaktbereichs gewählt wurden. Eine höhere Abdeckung des Kontaktbereichs mit der Stromabnehmerbeschichtung und der Elektrodenendplattenbeschichtung verringert natürlich den elektrischen Widerstand auf unter 1 Ohm.cm².

Die Kombination des Stromabnehmers, der Stromabnehmerbeschichtung und der Elektrodenbeschichtung besteht erfindungsgemäß zu insgesamt maximal 5 Gewichtsprozent aus Kupfer und Silber und zu maximal 0,05 Gewichtsprozent aus Elementen der Platingruppe (Rhudenium Ru, Rhodium Rh, Palladium Pd, Osmium Os, Iridium Ir und Platin Pt). Diese Grenzen gewährleisten, dass bei Auflösen der in der Elektrolytflüssigkeit löslichen Teile, also des Stromabnehmers, der Stromabnehmerbeschichtung und der Elektrodenbeschichtung, die Elektrolytflüssigkeit nicht derart kontaminiert wird, dass die Funktion der Redox-Durchflussbatterie kritisch beeinträchtigt wird. Bekanntermaßen sind die Elemente der Platingruppe sehr gute Katalysatoren für Wasserstoff, etwa um den Faktor 100 besser als Silber oder Kupfer, wodurch sich die unterschiedlichen Grenzwerte ergeben. Mit diesen Grenzwerten für den Gehalt an Kupfer, Silber und Elementen der Platingruppe ist gewährleistet, dass sich Stromabnehmer samt Stromabnehmerbeschichtung und Elektrodenbeschichtung bei Kontakt mit einer Elektrolytflüssigkeit zwar auflösen (was bei Kontakt nicht zu verhindern ist), aber die Elektrolytflüssigkeit nicht kritisch kontaminieren. Durch die Wahl der Materialien des Stromabnehmers, der Stromabnehmerbeschichtung und der Elektrodenendplattenbeschichtung ist - wie oben erwähnt - ein geringer elektrischer Widerstand und damit ein guter elektrischer Kontakt zwischen dem Stromabnehmer, der Stromabnehmerbeschichtung, der Elektrodenendplattenbeschichtung und schlussendlich auch der Elektrodenendplatte, gewährleistet.

Vorzugsweise besteht der Stromabnehmer (also der "Kern" des Stromabnehmers, ohne Stromabnehmerbeschichtung) zu mindestens 90 Gewichtsprozent aus Aluminium Al, Nickel Ni, Zinn Sn oder einer Legierung daraus, wobei ein hoher Aluminiumanteil aufgrund des geringen Gewichts und der hohen Leitfähigkeit zu bevorzugen ist. Ein hoher Nickelanteil würde zu einem hohen Gewicht und einer etwas schlechteren elektrischen Leitfähigkeit führen, ist aber dennoch vorstellbar. Ein Stromabnehmer aus reinem Zinn wäre beispielsweise zu weich.

Vorteilhafterweise besteht das Material der Elektrodenbeschichtung und/oder das Material der Stromabnehmerbeschichtung zu 90 Gewichtsprozent aus einem der folgenden Elementen oder Legierungen daraus: Zn, Sn, Ni, Pb, Sb, Cd, Cr, C, In, Al, V, Fe, Cu, Ag. Diese Materialien weisen eine hohe Leitfähigkeit auf und sind leicht zu verarbeiten. Es ist sogar vorstellbar, dass die Elektrodenbeschichtung und/oder die Stromabnehmerbeschichtung Kupfer, Silber, oder auch Elemente der Platingruppe enthalten, solange die Gesamtheit aus Stromabnehmer, Stromabnehmerbeschichtung und Elektrodenbeschichtung weniger als 5 Gewichtsprozent Kupfer, Silber und weniger als 0,05 Gewichtsprozent Elemente der Platin-gruppe enthalten.

Die Elektrodenbeschichtung und/oder die Stromabnehmerbeschichtung können vorteilhafterweise eine Dicke von zumindest 5 µm aufweisen, wenn sie zu mindestens 90 Gewichtsprozent aus einem der folgenden Elementen oder Legierungen daraus gefertigt sind: Zn, Sn, Ni, Pb, Sb, Cd, Cr, C, In, Al, V, Fe, Cu, Ag. Damit kann sichergestellt werden, dass in der Elektrodenbeschichtung bzw. Stromabnehmerbeschichtung keine Pinholes oder nur sehr wenige Pinholes auftreten. Besteht die Elektrodenbeschichtung und/oder die Stromabnehmerbeschichtung aus Nickel, so sollten vorzugsweise Schichtdicken von 50 µm nicht überschritten werden, da die Elektrodenbeschichtung bzw. die Stromabnehmerbeschichtung ansonsten brüchig werden könnte.

Das Material der Elektrodenbeschichtung und/oder das Material der Stromabnehmerbeschichtung kann jedoch auch zu 90 Gewichtsprozent aus anorganischen Verbindungen, wie z.B. Oxide, Hydroxide, Carbide, Phosphide, Sulphide, Boride, etc., oder elektrisch leitenden Polymeren bestehen. Diese Materialien weisen zwar in der Regel eine geringere elektrische Leitfähigkeit als Metalle auf, sind aber stabiler gegen Korrosion und Reaktionen bei Kontakt mit der Elektrolytflüssigkeit. Besonders dünne Stromabnehmerbeschichtungen dieser Art können theoretisch zu 100 % aus genannten anorganischen Verbindungen bestehen. Eine derartige Elektrodenbeschichtung bzw. Stromabnehmerbeschichtung sollte allerdings vorteilhafterweise eine Dicke von mindestens 0,1 µm aufweisen, um Pinholes zu vermeiden. Zu dicke Schichten könnten jedoch wie erwähnt die elektrische Leitfähigkeit negativ beeinflussen. Insgesamt müssen natürlich wiederum die oben genannten Grenzwerte für den elektrischen Widerstand und den Anteil der Kupfer, Silber und Platingruppenelemente eingehalten werden.

Vorteilhafterweise ist das Material der Elektrodenbeschichtung und das Material der Stromabnehmerbeschichtung identisch. Wesentlich ist jedenfalls, dass der elektrische Widerstand der Kombination aus Elektrodenbeschichtung, Stromabnehmer und Stromabnehmerbeschichtung über einen Zeitraum von mindestens 2000 Stunden 1 Ohm.cm² nicht überschreitet. Die Messung des elektrischen Widerstands erfolgt bei 45°C und einer Luftfeuchtigkeit von 60%.

Die Elektrodenbeschichtung kann auf Seite der Elektrodenendplatte eine Elektrodenzwischenschicht aufweisen, die vorzugweise eine Schichtdicke von zumindest 5 µm aufweist, was der Vermeidung von Pinholes dient.

Die Stromabnehmerbeschichtung kann auf Seite des Stromabnehmers eine Stromabnehmerzwischenschicht, vorzugsweise mit einer Schichtdicke von zumindest 4 µm, aufweisen.

Elektrodenzwischenschicht und Stromabnehmerzwischenschicht dienen in erster Linie als Haftvermittler und weiters zur Vermeidung von Diffusion zwischen den Materialien der Endelektrode und der Elektrodenbeschichtung, bzw. des Stromabnehmers und der Stromabnehmerbeschichtung. Das Material der Elektrodenzwischenschicht und/oder der Stromabnehmerzwischenschicht besteht vorteilhafterweise zu 90 Gewichtsprozent aus Nickel, Chrom, Titan, Kobalt oder einer Legierung daraus.

Die Elektrodenzwischenschicht wird als Teil der Elektrodenbeschichtung angesehen und die Stromabnehmerzwischenschicht als Teil der Stromabnehmerbeschichtung. Das bedeutet, dass auch Elektrodenzwischenschicht, wie auch Stromabnehmerzwischenschicht als Teil der Kombination des Stromabnehmers, der Stromabnehmerbeschichtung und der Elektrodenbeschichtung angesehen werden, welche zu insgesamt maximal 5 Gewichtsprozent aus Cu, Ag und zu maximal 0,05 % aus Elementen der Platingruppe besteht. Dieser Grenzwert muss dann natürlich bei der Materialwahl der Elektrodenzwischenschicht, bzw. Stromabnehmerzwischenschicht berücksichtigt werden. Dies folgt konsequent aus der Vermeidung der Kontamination der Elektrolytflüssigkeit.

Ein Zellstack einer Redox-Durchflussbatterie kann aus einer Mehrzahl zwischen zwei Endzellen angeordneten aneinanderliegenden Zellen bestehen, wobei die Zellen und Endzellen jeweils aus zwei mittels einer semipermeablen Membran getrennten Halbzellen bestehen, sich zwischen den Zellen Elektroden befinden und sich an einer hinsichtlich des Zellstacks axial außen liegenden Seite zumindest einer Endzelle eine erfindungsgemäße Abschlussanordnung befindet.

Eine Redox-Durchflussbatterie kann weiters zumindest einen derartigen Zellstack umfassen. Die erfindungsgemäße Abschlussanordnung, bzw. der erfindungsgemäße Zellstack kann prinzipiell für alle Redox-Durchfluss-Batterien mit wässrigen und sauren Elektrolytflüssigkeiten verwendet werden, insbesondere Vanadium-, Zink-Brom und Eisen-Chrom-Redox-Durchflussbatterien. Es ist jedoch auch vorstellbar die Abschlussanordnung, bzw. den Zellstack für alkalische Redox-Durchflussbatterien oder auch für Metall-Gas Durchflussbatterien, wie z.B. Aluminium-Luft, Vanadium-Luft-Durchflussbatterien zu verwenden.

In einer Redox-Durchflussbatterie kann eine Abschlussanordnung derart ausgeführt sein, dass die Kombination des Stromabnehmers, der Stromabnehmerbeschichtung und der Elektrodenbeschichtung der Abschlussanordnung in Relation zur in der Redox-Durchflussbatterie vorhandenen Elektrolytflüssigkeit weniger als 5 Gewichts-ppm an Cu, Ag und weniger als 0,05 Gewichts-ppm an Elementen der Platin-Gruppe beinhaltet.

Durch Berücksichtigung der Menge an Cu, Ag, und Elementen der Platin-Gruppe in der Abschlussanordnung in Relation zur potentiell kontaminierbaren Elektrolytflüssigkeit (wie erwähnt können die kontaminierenden Materialien auch über die Semipermeable Membran von der negativen in die positive Elektrolytflüssigkeit und umgekehrt gelangen), kann der ordnungsgemäße Betrieb trotz einem Auflösen des Stromabnehmers, der Stromabnehmerbeschichtung und der Elektrodenendplattenbeschichtung sichergestellt werden. Es ist klar, dass der Zellstack mit aufgelöstem Stromabnehmer nicht mehr voll funktionsfähig ist, jedoch werden die weiteren vorhandenen Zellstacks, insbesondere deren negative Elektroden nicht beeinträchtigt.

Sind in der Elektrolytflüssigkeit 0 ppm Kupfer und Silber vorhanden, so weisen gängige Redox-Durchflussbatterien, Wartungsintervalle von 5-10 Jahren auf. Bei 1 ppm Kupfer und Silber in der Elektrolytflüssigkeit verkürzen sich die Wartungsintervalle auf 3-6 Monate. Derartig kurze Wartungsintervalle stellen den noch zumutbaren Grenzfall dar, weshalb die Grenzwerte von 1ppm für Kupfer und Silber, sowie 0,01 ppm für Elemente der Platingruppe festgelegt wurden. D.h., dass auch im Falle einer teilweisen Auflösung der Abschlussanordnung in der Elektrolytflüssigkeit noch akzeptable Wartungsintervalle möglich sind.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 eine Redox-Durchflussbatterie mit einem Zellstack,
Fig.2 einen Schnitt durch den Zellstack,
Fig.3 eine Abschlussanordnung mit einem Stromabnehmer, einer Stromabnehmerbeschichtung, einer Stromabnehmerzwischenschicht, einer Elektrodenbeschichtung und einer Elektrodenzwischenschicht,
Fig. 4 den Kontaktwiderstand unterschiedlicher Kombinationen aus Stromabnehmer und Elektrodenendplatte,
Fig. 5 eine erfindungsgemäße Abschlussanordnung bestehend aus einem Stromabnehmer und einer Elektrodenendplatte.

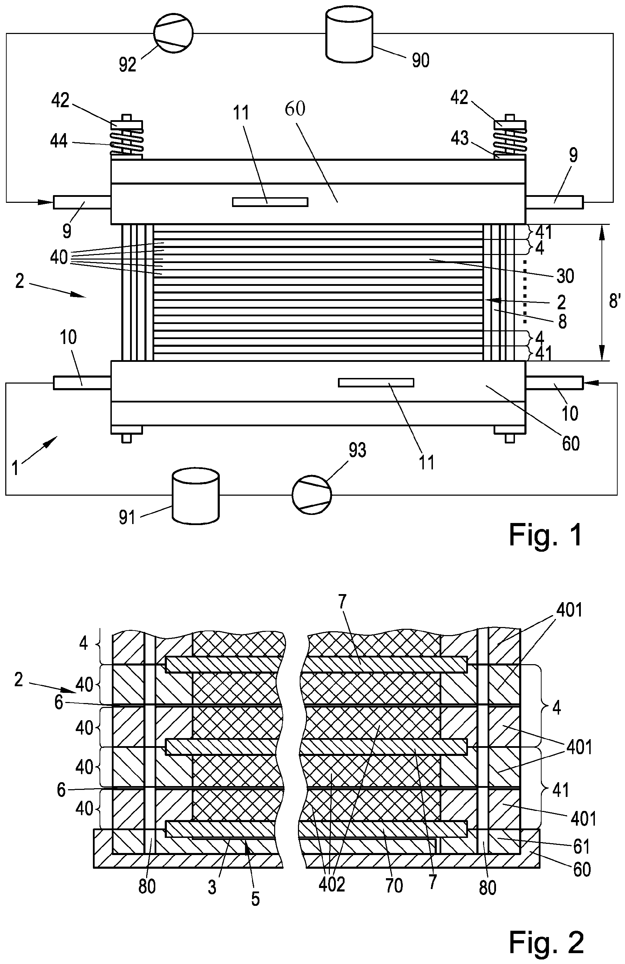

Mit Bezugnahme auf Fig.1 und 2 wird der hinlänglich bekannte Aufbau einer Redox-Durchflussbatterie 1 nach dem Stand der Technik erläutert. Ein Zellstack 2 einer Redox-Durchflussbatterie 1 umfasst eine Mehrzahl von Zellen 4, die wiederum jeweils aus zwei Halbzellen 40 gebildet werden. Zwischen zwei Halbzellen 40 einer Zelle 4 ist jeweils eine semipermeable Membran 6, typischerweise eine Ion-Austauschmembran (Kation- und/oder oder Anion-Austauschmembran, z.B. Nafion®) angeordnet. Zwischen zwei benachbarten Zellen 4 ist eine Elektrodenplatte 7, z.B. eine bipolare Platte, angeordnet. In den Rahmen 401 der positiven und negativen Halbzellen 40 (die abwechselnd angeordnet sind) sind jeweils eine positive oder negative Elektrode 402, z.B. Matten aus Karbon- oder Graphitfasern, angeordnet. Über Ausnehmungen 80 in den Rahmen 401 der Halbzellen 40, bzw. Zellen 4 werden anhand der Pumpen 92,93 elektrisch unterschiedlich geladene Elektrolytflüssigkeiten durch die Zellen 4 gepumpt, wobei in einer Zelle 2, bzw. der jeweiligen positiven Halbzelle 40 jeweils die positive Elektrode 402 von der positiven Elektrolytflüssigkeit und die negative Elektrode 402 der negativen Halbzelle 40 von der negativen Elektrolytflüssigkeit durchströmt wird. Dadurch kommt es wie hinlänglich bekannt durch elektrochemische Vorgänge zur Erzeugung von elektrischem Strom bzw. zu einer Aufladung der Redox-Durchflussbatterie 1, oder genauer der Elektrolytflüssigkeiten. Bei einigen Typen von Redox-Durchflussbatterien 1, wie z.B. einer Vanadium-Redox-Durchflussbatterie oder einer Vanadium-Polyhalid-Batterie, sind die beiden Elektrolytflüssigkeiten chemisch weitgehend ähnlich bzw. weisen nur einen anderen Oxidationszustand auf (z.B. V²⁺ und V³⁺, VO²⁺ und VO₂⁺).

Fig.1 zeigt ebenso die Tanks 90, 91 einer Redox-Durchflussbatterie 1, in welchen die Elektrolytflüssigkeiten gespeichert werden. Im Laufe der Energieerzeugung bzw. Energiespeicherung werden die Elektrolytflüssigkeiten unter Verwendung der Pumpen 92,93 zwischen den Halbzellen 40 und den Tanks 90, 91 umgewälzt. Die Tanks 90, 91 können räumlich getrennte Behälter sein, können aber auch, beispielsweise als zwei, durch eine Trennwand abgeteilte Abteile in einem gemeinsamen Behälter gebildet sein.

Der Zellstack 2 wird an den beiden axialen Enden durch eine Endplatte 60, beispielsweise aus Kunststoff gefertigt, abgeschlossen. Die Endplatten 60 werden durch Spannmittel 4, wie z.B. durchreichende Bolzen, die mittels Muttern 42, Beilagscheiben 43 und Federn 44 verspannt, und pressen somit die Rahmen 401 der Halbzellen 40 des Zellstacks 2 zusammen. An den Endplatten 60 kann weiters ein elektrischer Anschluss 11 vorgesehen sein, über den die Stromabnehmer 3 im Inneren der Redox-Durchflussbatterie 1 an beiden Seiten der Redox-Durchflussbatterie 1 mit einem externen Stromkreis verbunden werden können. Aus Übersichtsgründen ist der elektrische Anschluss nur in Fig. 1 dargestellt, und die Verbindung zwischen Stromabnehmer 3 und elektrischem Anschluss 11 nicht in den Figuren ersichtlich. Weiters sind im gezeigten Ausführungsbeispiel an den Endplatten 60 die Elektrolytflüssigkeitsanschlüsse 9, 10 für die Zu- und Abführung der Elektrolytflüssigkeiten vorgesehen.

Um ein mögliches Setzen der, beispielsweise elastischen, Rahmen der Zellen 4 durch den Anpressdruck zu verhindern, können zwischen den Endplatten 60 Abstandshalter 8 vorgesehen sein, um einen konstanten Abstand 8' zwischen den Endplatten 60 sicher zu stellen.

Fig. 2 zeigt einen Schnitt durch einen Zellstack 2, wobei einige Halbzellen 40 am axial unteren Ende des Zellstacks 2 als Ausschnitt dargestellt werden. Dabei wird eine Zelle 4 durch zwei Halbzellen 40 gebildet, wobei jede Halbzelle 40 eine von einem Rahmen 401 umgebene Elektrode 402 beinhaltet. Am axialen Ende des Zellstacks 2 wird eine Endzelle 41 durch zwei voneinander durch eine semipermeable Membran 6 getrennte Halbzellen 40 gebildet und durch einen Endrahmen 61 und eine Endplatte 60 abgeschlossen. Die oberste in Fig. 2 dargestellte Halbzelle 40 ist Teil einer nicht ganz dargestellten Zelle 4. Zwischen der Endzelle 41 (bzw. der axial außen liegenden Halbzelle 40 der Endzelle 41) und dem daran anliegenden Endrahmen 61 ist, wie in Fig. 2 dargestellt, anstelle einer Elektrodenplatte 7 eine Elektrodenendplatte 70 angeordnet. Zudem fasst der Endrahmen 61 einen Stromabnehmer 3, der zumindest teilweise in einem Kontaktbereich 5 an der Elektrodenendplatte 70 anliegt und mit der Elektrodenendplatte 70 in elektrischem Kontakt ist, wie in Fig. 2 angedeutet. Die in Fig. 2 skizzierte, und nachfolgend beschriebene Anordnung kann natürlich auch auf die gegenüberliegende Endzelle 41 am anderen axialen Ende des Zellstacks 2 zutreffen.

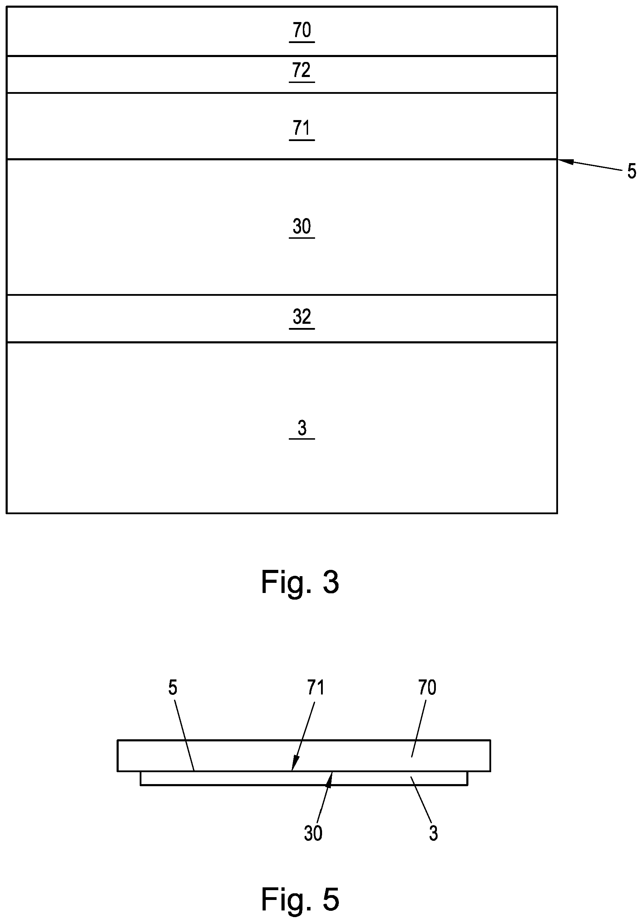

Der Stromabnehmer 3 besteht erfindungsgemäß zu insgesamt maximal 5 Gewichtsprozent aus Kupfer und Silber und zu insgesamt maximal 0,05 Gewichtsprozent aus Elementen der Platingruppe (Ruthenium Ru, Rhodium Rh, Palladium Pd, Osmium Os, Iridium Ir und Platin Pt), sowie vorzugsweise zu mindestens 90 Gewichtsprozent aus Aluminium, Nickel, Zinn oder einer Legierung daraus. Wird der Stromabnehmer 3 jedoch beispielsweise aus reinem Aluminium gefertigt und liegt dieser Stromabnehmer 3 ohne Stromabnehmerbeschichtung 30 direkt an der Elektrodenendplatte 70 an, so ist trotz der guten Leitfähigkeit von Aluminium aufgrund der Oberflächenoxidation ein sehr hoher Kontaktwiderstand von über 1 Ohm.cm² für den Stromabnehmer feststellbar. Daher ist der Stromabnehmer 3 zumindest in 20% des Kontaktbereichs 5 mit einer Stromabnehmerbeschichtung 30 aus einem elektrisch leitenden Material versehen. Fig. 3 zeigt einen schematischen, vergrößerten Ausschnitt einer vorteilhaft ausgestalteten Abschlussanordnung. Diese Abschlussanordnung besteht aus einem aus Aluminium gefertigten Stromabnehmer 3, z.B. mit einer Dicke von 200µm, einer auf dem Stromabnehmer 3 aufgebrachte Stromabnehmerbeschichtung 30, z.B. aus 13,84 µm Zinn, wobei sich eine Stromabnehmerzwischenschicht 32, z.B. aus 5,18 µm Nickel, zwischen Stromabnehmer 3 und Stromabnehmerbeschichtung 30 befindet.

Die Stromabnehmerzwischenschicht 32 ist ebenso elektrisch leitend und kann vorteilhafterweise aus Nickel, Chrom, Titan, Kobalt, oder einer Legierung daraus, bestehen und kann einerseits als Haftvermittler zwischen Stromabnehmer 3 und Stromabnehmerbeschichtung 30 dienen, andererseits auch als Barriere gegenüber einer möglichen Materialdiffusion zwischen dem Stromabnehmer 3 und der Stromabnehmerbeschichtung 30 wirken.

In Messungen wurde bei der Kombination aus Fig. 3 ein Kontaktwiderstand von <0,01 Ohm.cm² ermittelt, da die Oxidschicht auf dem Aluminium-Stromabnehmer 3 durch die zumindest teilweise Stromabnehmerbeschichtung 30, bzw. die Stromabnehmerzwischenschicht 30, zumindest teilweise verhindert wurde. In einem Zellstack 2 wird dieser Stromabnehmer 30 mit der Stromabnehmerbeschichtung 30 und der Stromabnehmerzwischenschicht 32 jedoch mit einer Elektrodenendplatte 70 in Kontakt gebracht. Kupfer weist einen spezifischen Widerstand von 1.7 10⁻⁸ Ohm.m auf, Aluminium 2,7.10⁻⁸ Ohm.m, Nickel 7.10⁻⁸ Ohm.m, und Zinn 11.10⁻⁸ Ohm.m. Mit den oben genannten Schichtdicken und den zugehörigen spezifischen Widerständen würde sich rechnerisch jeweils für den Stromabnehmer 3, die Stromabnehmerbeschichtung 30 und die Stromabnehmerzwischenschicht 32 ein elektrischer Widerstand von deutlich unter 0,1 Ohm.cm² ergeben. Aufgrund dieser sehr geringen Widerstandswerte könnte man von einem geringen Gesamtwiderstand der Abschlussanordnung ausgehen.

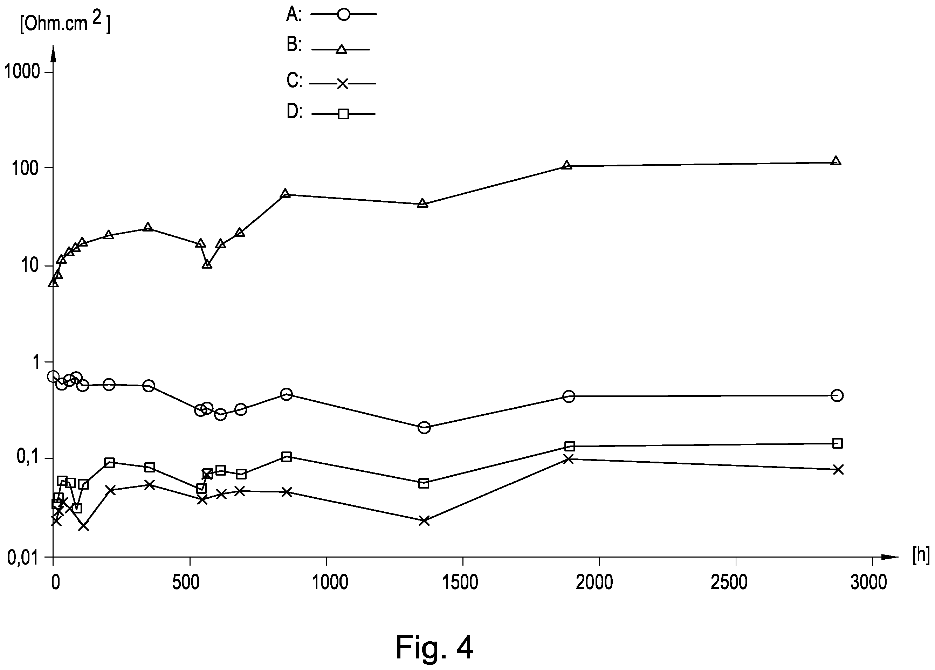

Es ergibt sich jedoch, wie anhand der Kurve B aus der Grafik in Fig. 4 ersichtlich, für die Schichtfolge Stromabnehmer 3 aus 200 µm Aluminium, Stromabnehmerzwischenschicht 32 aus 5 µm Nickel, Stromabnehmerbeschichtung 30 aus 15 µm Zinn (und einer Elektrodenendplatte 70) anfangs ein Widerstandswert von knapp unter 10 Ohm.cm², der auf einen erhöhten Kontaktwiderstand zwischen Stromabnehmer 3, Stromabnehmerbeschichtung 30, Stromabnehmerzwischenschicht 32 und der Endelektrode 7 zurückzuführen ist und bereits inakzeptabel hoch ist. Dabei "mitgemessen" wird auch der elektrische Widerstand der Elektrodenendplatte 70, der selbst jedoch jeweils lediglich 0,02 - 0,04 Ohm.cm² beträgt. Aufgrund von Kontaktkorrosion steigt der Widerstandswert jedoch über einen Zeitraum von 2000 Stunden auf über 100 Ohm.cm² an.

Um diesen Kontaktwiderstand und Korrosionswiderstand zwischen Stromabnehmer 3 und Elektrodenendplatte 70 zu verringern, wird die Elektrodenendplatte 70 im Kontaktbereich 5 zusätzlich mit einer Elektrodenbeschichtung 71 aus einem elektrisch leitfähigen Material versehen - wie in Fig. 3 skizziert. Die Elektrodenbeschichtung 71 muss natürlich in denselben mindestens 20% des Kontaktbereichs 5 aufgebracht werden, der bereits mit der Stromabnehmerbeschichtung 30 versehen ist, sodass die Elektrodenbeschichtung 71 auch tatsächlich an der Stromabnehmerbeschichtung 30 anliegt. Auch ist in Fig. 3 eine Elektrodenzwischenschicht 72 zwischen Elektrodenendplatte 70 und Elektrodenbeschichtung 71 skizziert, die ebenso wie die Stromabnehmerzwischenschicht 32, vorteilhafterweise aus Ni, Cr, Titan, Kobalt, oder einer Legierung daraus, bestehen kann. Die Elektrodenzwischenschicht 72 kann somit als Haftvermittler zwischen Elektrodenendplatte 70 und Elektrodenbeschichtung 71, wie auch als Barriere gegenüber einer möglichen Materialdiffusion zwischen der Elektrodenendplatte 70 und der Elektrodenbeschichtung 71 dienen.

Fig. 5 zeigt einen Querschnitt durch eine erfindungsgemäße Abschlussanordnung bestehend aus einem Stromabnehmer 3 und einer Elektrodenendplatte 70, wobei die Elektrodenendplatte 70 und der Stromabnehmer 3 in einem Kontaktbereich 5 aneinander anliegend angeordnet sind und in elektrischem Kontakt stehen.

Die Widerstandswerte ergeben sich also in erster Linie nicht aus dem elektrischen Widerstand der verwendeten Materialien der einzelnen Schichten, d.h. dem Stromabnehmer 3, der Stromabnehmerbeschichtung 30, der Elektrodenbeschichtung 71 (und ggf. der Stromabnehmerzwischenschicht 32 bzw. der Elektrodenzwischenschicht 72), sondern aus dem Kontaktwiderstand der Kombination des Stromabnehmers 3, der Stromabnehmerbeschichtung 30 und der Elektrodenbeschichtung 71 (und ggf. der Stromabnehmerzwischenschicht 32 bzw. der Elektrodenzwischenschicht 72), sowie auch aus dem Korrosionswiderstand dieser Kombination. Sowohl die Elektrodenbeschichtung 71 als auch die Stromabnehmerbeschichtung 30 sind zwar elektrisch leitfähig, müssen jedoch nicht aus demselben Material bestehen. Die Stromabnehmerbeschichtung 30, wie auch die Endplattenbeschichtung kann aus Zn, Sn, Ni, Pb, Sb, Cd, Cr, C, In, Al, Vd, Fe, oder einer Legierung daraus bestehen. Ebenso sind anorganische Verbindungen, wie z.B. Oxide, Hydroxide, Carbide, Phosphide, Sulphide, Boride, etc., oder elektrisch leitende Polymere als Beschichtung denkbar. Die Dicken und Materialien des Stromabnehmers 3, der Stromabnehmerbeschichtung 30 und der Elektrodenbeschichtung 71 werden dabei derart gewählt, dass der elektrische Widerstand der Kombination des Stromabnehmers 3, der Stromabnehmerbeschichtung 30 und der Elektrodenbeschichtung 71 über einen Zeitraum von mindestens 2000 Stunden 1 Ohm.cm² nicht überschreitet. Dieser Zeitraum kann z.B. im Normalbetrieb einer Redox-Durchflussbatterie 1, in welcher die Abschlussanordnung verbaut ist, gemessen werden, es ist auch eine Messung außer Betrieb oder nicht in einer Redox-Durchflussbatterie 1 verbaut möglich.

In Fig. 4 ist als Kurve C eine Abschlussanordnung bestehend aus der Schichtfolge Stromabnehmer 3 aus 200 µm Aluminium, Stromabnehmerzwischenschicht 32 aus 5µm Zinn Stromabnehmerbeschichtung 30 aus 10 µm Nickel, Endelektrodenbeschichtung 71 aus 10µm Nickel, Endelektrodenzwischenschicht 72 aus 5 µm Zinn (und Elektrodenendplatte 70) dargestellt. Wie ersichtlich ist, wurden für diese Schichtfolge Widerstandswerte von unter 0,1 Ohm.cm² über einen Zeitraum von 2000 Stunden gemessen. Würde der Stromabnehmer 3 mitsamt der Elektrodenendplatte 70 mit einer Elektrolytflüssigkeit der Redox-Durchflussbatterie in Kontakt geraten, so würden sich zwar Stromabnehmer 3, Stromabnehmerbeschichtung 30, Elektrodenbeschichtung 71, Stromabnehmerzwischenschicht 32 und Elektrodenzwischenschicht 72 auflösen, jedoch die Elektrolytflüssigkeit nicht kontaminieren, da die Materialien, hier beispielhaft Aluminium, Nickel und Zinn keine negativen Vorgänge in der Redox-Durchflussbatterie bewirken.

Wird auf die Elektrodenzwischenschicht 72 verzichtet, so steigt der Widerstandswert über einen Zeitraum von 2000 Stunden nicht über 1 Ohm.cm², wie ebenso in Fig. 4 als Kurve D dargestellt. Dieser im Vergleich zur Abschlussanordnung mit vorhandenen Elektrodenzwischenschicht 72 leicht erhöhte Widerstand ist vermutlich auf eine geringe, aber auftretende Oxidation einer oder mehrerer der vorhandenen Schichten (d.h. Stromabnehmerbeschichtung 30, Elektrodenbeschichtung 71, Stromabnehmerzwischenschicht 32 zurückzuführen, wobei die Oxidation insbesondere vom Rand oder auch von möglicherweise vorhandenen Pinholes oder Rissen in der betreffenden Schicht ausgehend fortschreiten kann.

Ebenso ist in Fig. 4. in Form der Kurve A auch der zeitlichen Verlauf des Widerstands eines Stromabnehmers 3 nach dem Stand der Technik dargestellt. Der Stromabnehmer 3 besteht aus 200 µm Kupfer und weist eine Stromabnehmerbeschichtung 30 von 3 µm µm Silber auf. Damit sind zwar Widerstandswerte von unter 1 Ohm.cm² möglich, der Stromabnehmer 3 mit Stromabnehmerbeschichtung 30 würde jedoch bei Kontakt mit einer Elektrolytflüssigkeit diese kontaminieren.

Eine typische Redox-Durchflussbatterie der Firma Gildemeister energy solutions des Typs CellCube FB30-70 umfasst Tanks 90,91 mit 3500 Liter Elektrolytflüssigkeit und zwanzig Zellstacks 2 mit jeweils zwei Stromabnehmern 3, wobei ein Stromabnehmer 600 cm² Fläche aufweist. Redox-Durchflussbatterien des Typs FB-10-130 weisen Tanks 90,91 mit 6500 Liter Elektrolytflüssigkeit auf, wobei in diesen Systemen sechs Zellstacks 2 vorhanden sind. Pro Zellstack sind jeweils 20-27 Zellen vorhanden. Vorteilhafterweise sind in zumindest einer, vorteilhafterweise in jeder Abschlussanordnung der Redox-Durchflussbatterie in der Kombination aus Stromabnehmer 3, Stromabnehmerbeschichtung 30 und Elektrodenbeschichtung 71 in Relation zur in der Redox-Durchflussbatterie vorhandenen Elektrolytflüssigkeit weniger als 1 Gewichts-ppm an Cu, Ag, und weniger als 0,01 Gewichts-ppm an Elementen der Platin-Gruppe vorhanden. Bei einer Redox-Durchflussbatterien des Typs FB-10-130 wären also 6500 Liter Elektrolytflüssigkeit vorhanden, wobei die Elektrolytflüssigkeit einer Dichte von 1,35 g/cm² aufweist. Damit würde 1 Gewichts-ppm der Redox-Durchflussbatterie einer Masse von 8,8 g entsprechen. Das bedeutet bei 20 Zellstacks, d.h. 40 Stromabnehmern mit jeweils einer Fläche von je 600 cm³ und einer Dicke von 200 µm, dass ein Stromabnehmer zu maximal 0,2% aus Kupfer und Silber bestehen darf, um bei Auflösung in 6500 Litern Elektrolytflüssigkeit 1 Gewichts-ppm nicht zu überschreiten. Das entspricht beispielsweise auf eine Fläche von 600 cm³ einer reinen Kupfer- oder Silberschicht mit einer Dicke von 0,4 µm.

## Patentansprüche

1. Abschlussanordnung eines Zellstacks (2) einer Redox-Durchflussbatterie (1) mit einem Stromabnehmer (3) und einer Elektrodenendplatte (70), wobei die Elektrodenendplatte (70) und der Stromabnehmer (3) in einem Kontaktbereich (5) aneinander anliegend angeordnet sind und in elektrischem Kontakt stehen, wobei in zumindest 20% des Kontaktbereichs (5) der Stromabnehmer (3) mit einer elektrisch leitfähigen Stromabnehmerbeschichtung (30) beschichtet ist, **dadurch gekennzeichnet, dass** die Elektrodenendplatte (70) in diesen zumindest 20% des Kontaktbereichs (5) mit einer elektrisch leitfähigen Elektrodenbeschichtung (71) beschichtet ist, **dass** die Kombination des Stromabnehmers (3), der Stromabnehmerbeschichtung (30) und der Elektrodenbeschichtung (71) zu insgesamt maximal 5 Gewichtsprozent aus Cu und Ag und zu insgesamt maximal 0,05 % aus Elementen der Platingruppe besteht, **und dass** der elektrische Widerstand der Kombination des Stromabnehmers (3), der Stromabnehmerbeschichtung (30) und der Elektrodenbeschichtung (71) über einen Zeitraum von mindestens 2000 Stunden 1 Ohm.cm² nicht überschreitet.

2. Abschlussanordnung nach Anspruch 1, **dadurch gekennzeichnet, dass** der Stromabnehmer (3) in zumindest 50%, vorzugsweise zumindest 90%, des Kontaktbereichs (5) mit einer elektrisch leitfähigen Stromabnehmerbeschichtung (30) beschichtet ist **und dass** die Elektrodenendplatte (70) in diesen zumindest 50%, vorzugsweise zumindest 90%, des Kontaktbereichs (5) mit einer elektrisch leitfähigen Elektrodenbeschichtung (71) beschichtet ist,

3. Abschlussanordnung nach Anspruch 1 oder 2, **dadurch gekennzeichnet, dass** der Stromabnehmer (3) zu mindestens 90 Gewichtsprozent aus Al, Sn, Ni oder Legierungen daraus besteht.

4. Abschlussanordnung nach einem der Ansprüche 1 bis 3, **dadurch gekennzeichnet, dass** die Elektrodenbeschichtung (71) und/oder die Stromabnehmerbeschichtung (30) zu mindestens 90 Gewichtsprozent aus einem der folgenden Elemente oder Legierungen daraus bestehen: Zn, Sn, Ni, Pb, Sb, Cd, Cr, C, In, Al, V, Fe, Cu, Ag.

5. Abschlussanordnung nach Anspruch 4, **dadurch gekennzeichnet, dass** die Elektrodenbeschichtung (71) und/oder die Stromabnehmerbeschichtung (30) eine Schichtdicke von zumindest 5 µm aufweisen.

6. Abschlussanordnung nach einem der Ansprüche 1 bis 3, **dadurch gekennzeichnet, dass** die Elektrodenbeschichtung (71) und/oder die Stromabnehmerbeschichtung (30) zu 90 Gewichtsprozent aus elektrisch leitfähigen anorganischen Verbindungen, und/oder elektrisch leitenden Polymeren bestehen.

7. Abschlussanordnung nach Anspruch 6, **dadurch gekennzeichnet, dass** die Elektrodenbeschichtung (71) und/oder die Stromabnehmerbeschichtung (30) eine Schichtdicke von zumindest 0,1 µm aufweisen.

8. Abschlussanordnung nach einem der Ansprüche 1 bis 7 **dadurch gekennzeichnet, dass** das Material der Elektrodenbeschichtung (71) und das Material der Stromabnehmerbeschichtung (30) identisch sind.

9. Abschlussanordnung nach einem der Ansprüche 1 bis 8, **dadurch gekennzeichnet, dass** sich zwischen der Elektrodenbeschichtung (71) und der Elektrodenendplatte (70) eine elektrisch leitfähige Elektrodenzwischenschicht (72), vorzugsweise mit einer Schichtdicke von zumindest 5 µm, befindet.

10. Abschlussanordnung nach einem der Ansprüche 1 bis 9, **dadurch gekennzeichnet, dass** sich zwischen der Stromabnehmerbeschichtung (30) und dem Stromabnehmer (3) eine Stromabnehmerzwischenschicht (32), vorzugsweise mit einer Schichtdicke von zumindest 5 µm, befindet.

11. Abschlussanordnung nach Anspruch 9 oder 10, **dadurch gekennzeichnet, dass** das Material der Elektrodenzwischenschicht (72) und/oder der Stromabnehmerzwischenschicht (32) zu mindestens 90 Gewichtsprozent aus Ni, Cr, Ti, Co, oder Legierungen daraus, besteht.

12. Zellstack (2) einer Redox-Durchflussbatterie (1) bestehend aus einer Mehrzahl zwischen zwei Endzellen (41) angeordneten aneinanderliegenden Zellen (4), wobei die Zellen (4) und Endzellen (41) jeweils aus zwei mittels einer semipermeablen Membran (6) getrennten Halbzellen (40) bestehen, sich zwischen den Zellen (4) Elektroden befinden und sich an einer hinsichtlich des Zellstacks (2) axial außen liegenden Seite zumindest einer Endzelle (41) eine Abschlussanordnung nach einem der Ansprüche 1 bis 11 befindet.

13. Redox-Durchflussbatterie umfassend zumindest einen Zellstack nach Anspruch 12.

14. Redox-Durchflussbatterie nach Anspruch 13, **dadurch gekennzeichnet, dass** die Kombination des Stromabnehmers (3), der Stromabnehmerbeschichtung (30) und der Elektrodenbeschichtung (71) zumindest einer Abschlussanordnung in Relation zur in der Redox-Durchflussbatterie vorhandenen Elektrolytflüssigkeit weniger als 1 Gewichts-ppm an Cu und Ag beinhaltet.

15. Redox-Durchflussbatterie nach Anspruch 13 oder 14, **dadurch gekennzeichnet, dass** die Kombination des Stromabnehmers (3), der Stromabnehmerbeschichtung (30) und der Elektrodenbeschichtung (71) zumindest einer Abschlussanordnung in Relation zur in der Redox-Durchflussbatterie vorhandenen Elektrolytflüssigkeit weniger als 0,01 Gewichts-ppm an Elementen der Platin-Gruppe beinhaltet.

## Claims

1. A termination arrangement of a cell stack (2) of a redox flow battery (1) with a current collector (3) and an electrode end plate (70), wherein the electrode end plate (70) and the current collector (3) are arranged adjacent to each other in a contact region (5) and are in electrical contact, wherein in at least 20% of the contact region (5) the current collector (3) is coated with an electrically conductive current collector coating (30), **characterized in that** the electrode end plate (70) in these at least 20% of the contact region (5) is coated with an electrically conductive electrode coating (71), **in that** the combination of the current collector (3), the current collector coating (30) and the electrode coating (71) consists of a maximum of 5% by weight of Cu and Ag and a maximum of 0.05% of elements of the platinum group, **and that** the electrical resistance of the combination of the current collector (3), the current collector coating (30) and the electrode coating (71) does not exceed 1 ohm.cm² over a period of at least 2000 hours.

2. The termination arrangement according to claim 1, **characterized in that** the current collector (3) is coated in at least 50%, preferably at least 90%, of the contact region (5) with an electrically conductive current collector coating (30), **and in that** the electrode end plate (70) in these at least 50%, preferably at least 90%, of the contact region (5) is coated with an electrically conductive electrode coating (71).

3. The termination arrangement according to claim 1 or 2, **characterized in that** the current collector (3) consists of at least 90% by weight of Al, Sn, Ni or alloys thereof.

4. The termination arrangement according to any of the claims 1 to 3, **characterized in that** the electrode coating (71) and/or the current collector coating (30) consist of at least 90% by weight of one of the following elements or alloys thereof: Zn, Sn, Ni, Pb, Sb, Cd, Cr, C, In, Al, V, Fe, Cu, Ag.

5. The termination arrangement according to claim 4, **characterized in that** the electrode coating (71) and/or the current collector coating (30) have a layer thickness of at least 5 µm.

6. The termination arrangement according to any of claims 1 to 3, **characterized in that** the electrode coating (71) and/or the current collector coating (30) consists 90% by weight of electrically conductive inorganic compounds, and/or electrically conductive polymers.

7. The termination arrangement according to claim 6, **characterized in that** the electrode coating (71) and/or the current collector coating (30) have a layer thickness of at least 0.1 µm.

8. The termination arrangement according to any of claims 1 to 7, **characterized in that** the material of the electrode coating (71) and the material of the current collector coating (30) are identical.

9. The termination arrangement according to any of claims 1 to 8, **characterized in that** an electrically conductive electrode interlayer (72), preferably with a layer thickness of at least 5 µm, is located between the electrode coating (71) and the electrode end plate (70).

10. The termination arrangement according to any of claims 1 to 9, **characterized in that** there is a current collector interlayer (32), preferably with a layer thickness of at least 5 µm, between the current collector coating (30) and the current collector (3).

11. The termination arrangement according to claim 9 or 10, **characterized in that** the material of the electrode interlayer (72) and/or the current collector interlayer (32) consists of at least 90% by weight of Ni, Cr, Ti, Co, or alloys thereof.

12. A cell stack (2) of a redox flow battery (1) consisting of a plurality of adjacent cells (4) arranged between two end cells (41), wherein the cells (4) and end cells (41) each consist of two half-cells (40) separated by a semipermeable membrane (6), electrodes are located between the cells (4), and a termination arrangement according to any of claims 1 to 11 is located on at least one end cell (41) on a axially outer side with respect to the cell stack (2).

13. A redox flow battery comprising at least one cell stack according to claim 12.

14. The redox flow battery according to claim 13, **characterized in that** the combination of the current collector (3), the current collector coating (30) and the electrode coating (71) of at least one termination arrangement contains less than 1 ppm by weight of Cu and Ag in relation to the electrolyte fluid present in the redox flow battery.

15. The redox flow battery according to claim 13 or 14, **characterized in that** the combination of the current collector (3), the current collector coating (30) and the electrode coating (71) of at least one termination arrangement contains less than 0.01 ppm by weight of elements of the platinum group in relation to the electrolyte fluid present in the redox flow battery.

## Revendications

1. Dispositif de fermeture d'un empilement de cellules (2) d'une batterie à flux redox (1) avec un collecteur de courant (3) et une plaque d'extrémité d'électrode (70), dans lequel la plaque d'extrémité d'électrode (70) et le collecteur de courant (3) sont adjacents l'un à l'autre dans une zone de contact (5) et sont en contact électrique, dans lequel, dans au moins 20 % de la zone de contact (5), le collecteur de courant (3) est recouvert d'un revêtement de collecteur de courant électriquement conducteur (30), **caractérisé en ce que** la plaque d'extrémité d'électrode (70) est recouverte dans lesdits 20 % de la zone de contact (5) d'un revêtement d'électrode électriquement conducteur (71), **en ce que** la combinaison du collecteur de courant (3), du revêtement de collecteur de courant (30) et du revêtement d'électrode (71) est constituée d'un total de 5 % maximum en poids de Cu et d'Ag et d'un total de 0,05 % maximum d'éléments du groupe platine, **et en ce que** la résistance électrique de la combinaison du collecteur de courant (3), du revêtement de collecteur de courant (30) et du revêtement d'électrode (71) ne dépasse pas 1 ohm.cm² sur une période d'au moins 2 000 heures.

2. Dispositif de fermeture selon la revendication 1, **caractérisé en ce que** le collecteur de courant (3) est recouvert d'un revêtement de collecteur de courant électriquement conducteur (30) dans au moins 50 %, de préférence au moins 90 %, de la zone de contact (5) **et en ce que** la plaque d'extrémité d'électrode (70) est recouverte d'un revêtement d'électrode électriquement conducteur (71) dans lesdits au moins 50 %, de préférence au moins 90 %, de la zone de contact (5),

3. Dispositif de fermeture selon la revendication 1 ou 2, **caractérisé en ce que** le collecteur de courant (3) est constitué d'au moins 90 % en poids d'AI, de Sn, de Ni ou des alliages de ceux-ci.

4. Dispositif de fermeture selon l'une des revendications 1 à 3, **caractérisé en ce que** le revêtement d'électrode (71) et/ou le revêtement de collecteur de courant (30) est constitué d'au moins 90 % en poids de l'un des éléments suivants ou des alliages de ceux-ci :
Zn, Sn, Ni, Pb, Sb, Cd, Cr, C, In, Al, V, Fe, Cu, Ag.

5. Dispositif de fermeture selon la revendication 4, **caractérisé en ce que** le revêtement d'électrode (71) et/ou le revêtement de collecteur de courant (30) ont une épaisseur de couche d'au moins 5 µm.

6. Dispositif de fermeture selon l'une des revendications 1 à 3, **caractérisé en ce que** le revêtement d'électrode (71) et/ou le revêtement de collecteur de courant (30) sont constitués à 90 % en poids de composés inorganiques électriquement conducteurs, et/ou de polymères électriquement conducteurs.

7. Dispositif de fermeture selon la revendication 6, **caractérisé en ce que** le revêtement d'électrode (71) et/ou le revêtement de collecteur de courant (30) ont une épaisseur de couche d'au moins 0,1 µm.

8. Dispositif de fermeture selon l'une des revendications 1 à 7, **caractérisé en ce que** le matériau du revêtement d'électrode (71) et le matériau du revêtement de collecteur de courant (30) sont identiques.

9. Dispositif de fermeture selon l'une des revendications 1 à 8, **caractérisé en ce qu'**une couche intermédiaire d'électrode (72) électriquement conductrice, de préférence ayant une épaisseur de couche d'au moins 5 µm, se trouve entre le revêtement d'électrode (71) et la plaque d'extrémité d'électrode (70).

10. Dispositif de fermeture selon l'une des revendications 1 à 9, **caractérisé en ce qu'**une couche intermédiaire de collecteur de courant (32), de préférence ayant une épaisseur de couche d'au moins 5 µm, se trouve entre le revêtement de collecteur de courant (30) et le collecteur de courant (3).

11. Dispositif de fermeture selon la revendication 9 ou 10, **caractérisé en ce que** le matériau de la couche intermédiaire d'électrode (72) et/ou de la couche intermédiaire de collecteur de courant (32) est constitué d'au moins 90 % en poids de Ni, Cr, Ti, Co ou d'alliages de ceux-ci.

12. Empilement de cellules (2) d'une batterie à flux redox (1) constitué d'une pluralité de cellules (4) disposées entre deux rangées d'extrémité (41) et adjacentes les unes aux autres, où les cellules (4) et les rangées d'extrémité (41) sont constituées chacune de deux demi-cellules (40) séparées par une membrane semi-perméable (6), des électrodes se trouvant entre les cellules (4) et, sur un côté d'au moins une rangée d'extrémité (41) qui est axialement extérieur par rapport à l'empilement de cellules (2), un dispositif de fermeture selon l'une des revendications 1 à 11 est prévu.

13. Batterie à flux redox comprenant au moins un empilement de cellules selon la revendication 12.

14. Batterie à flux redox selon la revendication 13, **caractérisée en ce que** la combinaison du collecteur de courant (3), du revêtement de collecteur de courant (30) et du revêtement d'électrode (71) d'au moins un dispositif de fermeture contient moins de 1 ppm en poids de Cu et d'Ag par rapport à l'électrolyte liquide présent dans la batterie à flux redox.

15. Batterie à flux redox selon la revendication 13 ou 14, **caractérisée en ce que** la combinaison du collecteur de courant (3), du revêtement de collecteur de courant (30) et du revêtement d'électrode (71) d'au moins un dispositif de fermeture contient moins de 0,01 ppm en poids d'éléments du groupe platine par rapport à l'électrolyte liquide présent dans la batterie à flux redox.
